# EUROPEAN PATENT SPECIFICATION

(11) **EP 2 755 865 B1**
(45) Date of publication and mention of the grant of the patent: **11.05.2016**
(21) Application number: 11755072.3
(22) Date of filing: 12.09.2011
(51) Int. Cl.: B60R 11/04, F16C 11/06, F16M 11/14, H01R 35/04

(54) **AN ELECTRONIC DEVICE FOR A MOTOR VEHICLE, IN PARTICULAR A CAMERA**
ELEKTRONISCHES GERÄT FÜR EIN FAHRZEUG, INSBESONDERE EINE KAMERA
APPAREIL ÉLECTRONIQUE POUR UN VÉHICULE, EN PARTICULIER UNE CAMÉRA

(43) Date of publication of application: 23.07.2014
(73) Proprietor: Valeo Schalter und Sensoren GmbH, 74321 Bietigheim-Bissingen (DE)
(72) Inventor: MOIZARD, Julien, F-75012 Paris (FR); REILHAC, Patrice, 74321 Biettigheim-Bissingen (DE); KUOCH, Siav Kuong, F-94100 Saint Maur des Fosses (FR); BONHOURE, Patrick, F-74100 Annemasse (FR); REIJNDERS, Waldo, NL-1092 EH Amsterdam (NL); ZEELENBERG, Derk-Jan, NL-2565 PA Den Haag (NL)
(86) International application number: PCT/EP2011/065766
(87) International publication number: WO 2013/037394

(56) References cited:
- EP-A1- 1 743 804
- WO-A1-95/34783
- WO-A1-2005/124944
- WO-A2-2011/112839
- GB-A- 381 354
- US-A1- 2010 193 649
- US-A1- 2010 265 328

## Description

The present invention relates to a camera for a motor vehicle. The camera comprises a first part and second part pivotally arranged on the first part through a ball joint comprising a sphere on the one hand and a socket on the other hand. The second part comprises an electronic circuit for providing a functionality in the motor vehicle.

Presently, the interest is focussed on an autonomous camera which can be used within a motor vehicle. Such cameras use batteries for power supply and thus are independent of the on-board power network of the vehicle. Such cameras can be used in order to monitor the vehicle when the driver is inside or even outside the vehicle. Possible applications are: rear seat monitoring, trunk monitoring, trailer monitoring as well as intrusion monitoring and alert. Also, the camera can have a communication device which allows communicating with external devices, such as a driver assistance system of the vehicle and/or a communication device of the driver, namely a mobile phone or the like. The camera can for instance communicate according to the WiFi-standard or the 3G-standard.

To be compliant with all cases of use identified above, there is a need for a camera that has at least two degrees of freedom. This means that the camera should be able to be moved in at least two different directions, in particular in three different rotational directions. Thus, on the one hand, the electronic device should be designed such that a movement of the second part relative to the first part of the electronic device is allowed in all directions, i.e. in three rotational directions. For this purpose, a ball joint can be provided comprising a sphere and a socket. On the other hand, however, an integrated electrical connection between the first part and the second part should be provided without a visible wire.

The document JP 2004 289 625 A describes a car security apparatus which comprises a camera. The camera is installed in the interior of the car and takes images of the inside or the outside of the vehicle. Those images can be forwarded via communication equipment to a mobile terminal allowing the car owner to monitor the inside or vicinity of the car in real time.

Furthermore, the document US 6 524 020 B2 describes a camera which is suitable for installation in a passenger car and is arranged on a superstructure via a retaining device. The retaining device is designed such that the camera can be swung by the retaining device out of a resting position sunk into a wall of the superstructure into an extended operating position and vice versa.

Furthermore, the document US 6 315 180 B1 discloses a camera mount for supporting a camera in a motor vehicle.

The document US 2007/0120697 A1 describes an electronic device to be located in the cabin of a motor vehicle and comprising a rotatable camera lens. A gooseneck-type mounting hardware for securing the device in the vehicle is pictured while the camera lens is configured to rotate about 360°, thus pointing in a variety of directions allowing to capture images from a variety of angles.

US 2010/0265328 shows a camera according to the preamble of claim 1. WO 9534 783, GB 381354, WO 2005/124 944 and US 2010 193649 show devices with ball joint connections with energy supply.

It is an object of the present invention to provide a camera for a motor vehicle that comprises a first part and a second part pivotally arranged on the first part, wherein the second part is movable relative to the first part in at least two degrees of freedom and additionally an electrical connection between the first part and the second part is provided without using a visible wire and without affecting the movement of the second part relative to the first part.

According to the invention, this object is solved by a camera with the features of patent claim 1. Advantageous embodiments of the invention are the subject matter of the dependent claims.

A camera for a motor vehicle, according to the present invention, comprises a first part and a second part. The second part is pivotally arranged on the first part through a ball joint comprising a sphere on the one hand and a socket on the other hand. The second part comprises an electronic circuit for providing a functionality in the motor vehicle. The first part comprises an energy supply unit for supplying the electronic circuit with electrical power. At least a surface of the sphere of the ball joint is at least partially formed from an electrically conductive material such that the electronic circuit is supplied with the electrical power through the surface of the sphere.

Thus, the invention is based on the realization that to allow a movement of the second part relative to the first part in at least two directions as well as to integrate the electrical connection between the first part and the second part the ball joint - namely its sphere - can be used for supplying the electronic circuit with electrical power such that the electrical power for the second part is provided through the sphere. For this purpose, at least the surface of the sphere is formed from an electrically conductive material through which the electronic circuit is electrically coupled to the energy supply unit. Thus, the ball joint - namely the sphere - has two different functions: the function of allowing the movement of the second part relative to the first part in at least two different directions on the one hand as well as the function of the transmission of the electrical power from the first part to the second part on the other hand. In such a way, the electronic device does without a separate cable or wire, which saves additional components. Furthermore, the electronic device according to the invention is particularly compact because no further components have to be used in order to transmit the electrical power from the first part to the second part.

Said functionality provided in the motor vehicle comprises recording images. The camera can be an autonomous camera which is independent of an on-board power network of the motor vehicle. The camera can be arranged within the motor vehicle such that it can acquire images of the interior of the vehicle and/or images of the outside of the motor vehicle.

It turns out to be particularly advantageous if the surface of the sphere - at least the surface - is subdivided into two electrically conductive portions which are electrically insulated from each other by means of an insulate element. The electronic circuit can be electrically connected with a ground of the energy supply unit through one of the portions and with a positive electric potential of the energy supply unit through the other portion. In this embodiment, the sphere of the ball joint provides two separate electrical connections between the first part and the second part, namely the connection with the ground on the one hand as well as the connection with the positive electric potential on the other hand. Thus, no further wires have to be used to provide the connection between the first and the second part.

For instance, the energy supply unit which is arranged in the first part of the electronic device may be a battery or a rechargeable accumulator or the like. The first part thus is a docking station for the electronic circuit arranged in the second part of the electronic device. However, it is not necessary to provide an active supply unit within the first part. Equally, the energy supply unit can be understood as a single electrical connection through which the electronic circuit is supplied with electrical power; here, a port can be provided on the first part for connecting the energy supply unit with an external battery or the like. It is merely essential that the electronic circuit being arranged within the second part is supplied through the first part on which the second part is pivotally arranged.

The two portions of the sphere can be sphere halves. This means that the sphere of the ball joint is divided into two sphere halves which are electrically insulated from each other, namely by means of an insulation element. Such an insulation element can be a disc or plate which is formed from an electrically insulating material and by means of which the two sphere halves are separated from one another. This embodiment has the advantage that the second part has a relatively large range of motion - 90° in one direction and 90° in the other direction - without reversing the polarity of the electrical connection between the electronic circuit and the energy supply unit.

In one embodiment, the socket comprises at least one spring contact electrically coupled to the electronic circuit and connected to the conductive sphere under spring tension. In this way, a reliable electrical connection between the first part and the second part is provided in every single position of the second part relative to the first part.

The socket can comprise a first spring contact connected to a first of the two sphere portions under spring tension as well as a second spring contact connected to the second sphere portion under spring tension. Thus, one of the spring contacts is connected to the ground, while the other spring contact is connected to the positive electric potential of the energy supply unit. This embodiment has the advantage that the power circuit between the energy supply unit and the electronic circuit can hardly be broken.

The first part is movable relative to the second part such that a polarity of the electrical connection between the electronic circuit and the energy supply unit is reversible. This means that the two sphere portions on the one hand and the two spring contacts on the other hand can commutate. If the second part is rotated by 180° relative to the first part, the first spring contact will be electrically connected to the second sphere portion and the second spring contact will be on the first sphere portion. In this embodiment, the electronic circuit can be designed such that it allows the reversal of the polarity and is able to take into account this constraint to provide a continuous power supply. In particular, the electronic circuit can be adapted to detect a reversal of the polarity and to switch itself to a mode with a reversed polarity. In this way, the second part has an unlimited range of motion relative to the first part and can be rotated without limits.

Preferably, the second part is movable relative to the first part in at least two different directions, in particular in three different directions. This means that the second part has at least two degrees of freedom, in particular three degrees of freedom. This allows to use the electronic device - in particular a camera - for many different applications, such as rear seat monitoring, trunk monitoring, trailer monitoring as well as intrusion monitoring and alert.

The sphere can be coupled to the first part through a pin and the socket of the ball joint is preferably formed in the second part. At least a surface of the pin can be at least partially formed from an electrically conductive material such that the electronic circuit is supplied with the electrical power through the surface of the sphere and through the surface of the pin. Thus, the sphere is electrically connected to the pin and thus to the energy supply unit within the first part. By providing the pin it can be achieved that the sphere is arranged spaced apart from the main body of the first part and the second part can be moved on the sphere in multiple degrees of freedom. Preferably, the sphere is immovable coupled to the first part through the pin such that it cannot be rotated around an axis defined by the pin.

Alternatively, the pin and thus the sphere can be coupled to a freewheel comprising a shaft on the one hand and a socket on the other hand. The socket can be formed in the first part and in the socket the shaft can be rotatable arranged. The sphere can be joined to the shaft. In this set-up, at least a surface of the shaft can be at least partially formed from an electrically conductive material such that the electronic circuit is supplied with the electrical power through the surface of the sphere and through the surface of the shaft. Thus, the sphere is electrically connected to the shaft.

In one embodiment, the sphere can be detachable connected to the first part by means of a plug-in connection. Here, the sphere can be joined to a plug element through said pin, while in the first part a corresponding socket can be formed for accommodating the plug element. Also, an electrical connection can be provided in the plug-in connection. For instance, electrical pins can be provided on the one side - in the socket for example - and electrical outlets can be provided on the other side - on the plug element for example. In this embodiment, thus, the second part can be detached from the first part.

This has the advantage that the first part including the energy supply unit can be replaced by a new one, if the battery is empty.

The first part can comprise a fastening unit for fastening the electronic device to a vehicle component. The fastening unit can for example comprise a suction cup for fastening the electronic device to the vehicle component. For instance, the electronic device can be able to be attached to a windscreen of the motor vehicle.

In summary, to be able to solve the mechanical movement issue (movements of the second part in all directions) and the wiring issue (wire integrated in the electronic device) the sphere of the ball joint is split into two parts. One part is the ground connection and the other one for the positive electric potential, for instance +12V. These two parts are separated by an insulating element to avoid a short circuit. The electrical connection between the sphere and the socket can be allowed thanks to two spring contacts such that the power is provided to the electronic circuit through the sphere and the spring contacts which are allow a permanent contact independently of the current position of the second part relative to the first part. The main advantage of this solution is to have a compact mechanical connection of the first part and the second part with three rotational degrees of freedom. Moreover, there is no need to have a wire connected to the electronic circuit. The power is provided directly through the ball joint.

Further features of the invention appear from the claims, the figures and the description of figures. All of the features and feature combinations mentioned above in the description as well as the features and feature combinations mentioned below in the description of figures and/or shown in the figures alone are usable not only in the respectively specified combination, but also in other combinations or else alone.

Now, the invention is explained in more detail by way of individual preferred embodiments as well as with reference to the attached drawings.

Therein show:
- Fig. 1 to 4: schematic views of a motor vehicle, wherein different applications of an autonomous camera will be explained in more detail;
- Fig. 5: a schematic and perspective view of a camera according to one embodiment of the present invention;
- Fig. 6: a schematic and perspective view of a camera according to one embodiment, wherein an electrical connection between a first part and a second part will be explained in more detail;
- Fig. 7a to 7d: schematic and perspective views of the camera according to Fig. 5, wherein different positions of the second part relative to the first part are shown;
- Fig. 8a to 8b: schematic and perspective views of the camera on the one hand and of the first part on the other hand, wherein the sphere is removed from a main body of the first part;
- Fig. 9: a schematic and exploded view of the sphere; and
- Fig. 10: a schematic and exploded view of the first part.

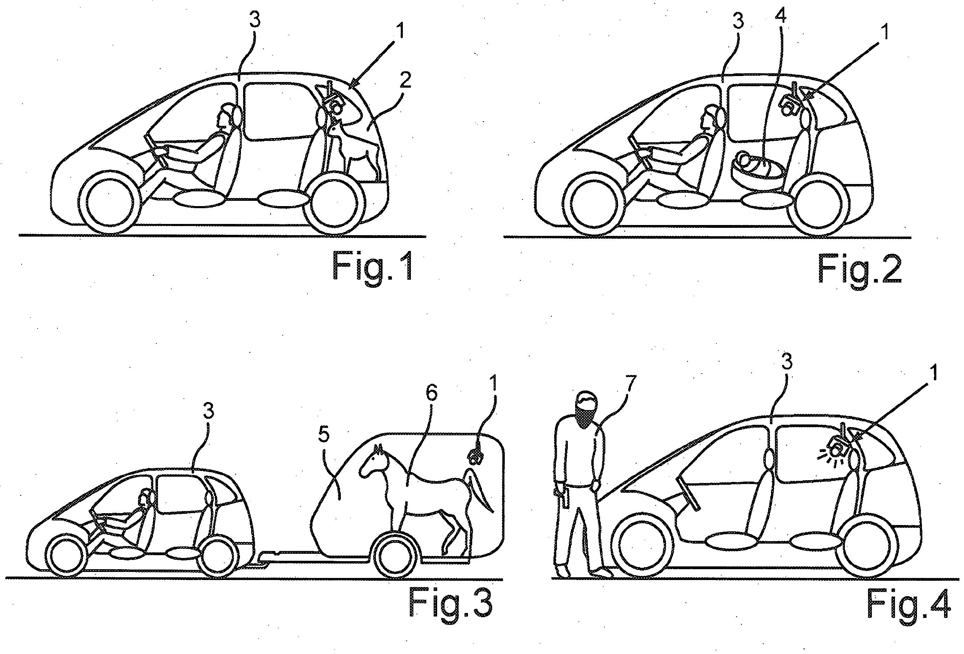

Presently, an autonomous camera is provided which can be used within a motor vehicle for monitoring the interior and/or the outside of the vehicle. In figs. 1 to 4 different applications of the camera are shown. In fig. 1 a camera 1 is used for monitoring a trunk 2 of a motor vehicle 3 in which a dog is present. The camera 1 can for instance be arranged on a headliner of the vehicle 3. In fig. 2 the camera 1 is used for monitoring a rear seat of the motor vehicle 3 on which a baby 4 is sleeping. In fig. 3 the camera 1 is arranged in a trailer 5 which is connected to the motor vehicle 3. Here, the camera 1 is used for monitoring the interior of the trailer 5 in which a horse 6 is present. Finally, in fig. 4 the camera 1 is mounted in the interior of the motor vehicle 3 to monitor the surroundings of the vehicle 3. Images with an intrusion 7 can be transmitted from the camera 1 to an external communication device, such as a mobile phone of the vehicle driver.

In all cases, the camera 1 can comprise an internal communication device by means of which the camera 1 can communicate with external devices. For example, the camera 1 can communicate with a driver assistance system of the vehicle 3 and/or with an external communication device (e.g. a mobile phone) of the vehicle driver. In the situations of figs. 1 to 3, the camera 1 can for example transmit images to a display device arranged in the motor vehicle 3 such that the acquired images can be displayed on the display device. Such a display device can be arranged within the vehicle 3 in front of the driver, for example on a central console.

To be compliant with all cases of use identified in figs. 1 to 4, the camera 1 should have three degrees of freedom. This means that the camera 1 should be able to be moved in three rotational directions. On the other hand, an electrical connection between an energy supply unit and an electronic circuit comprising an image sensor of the camera should be provided without using a visible wire.

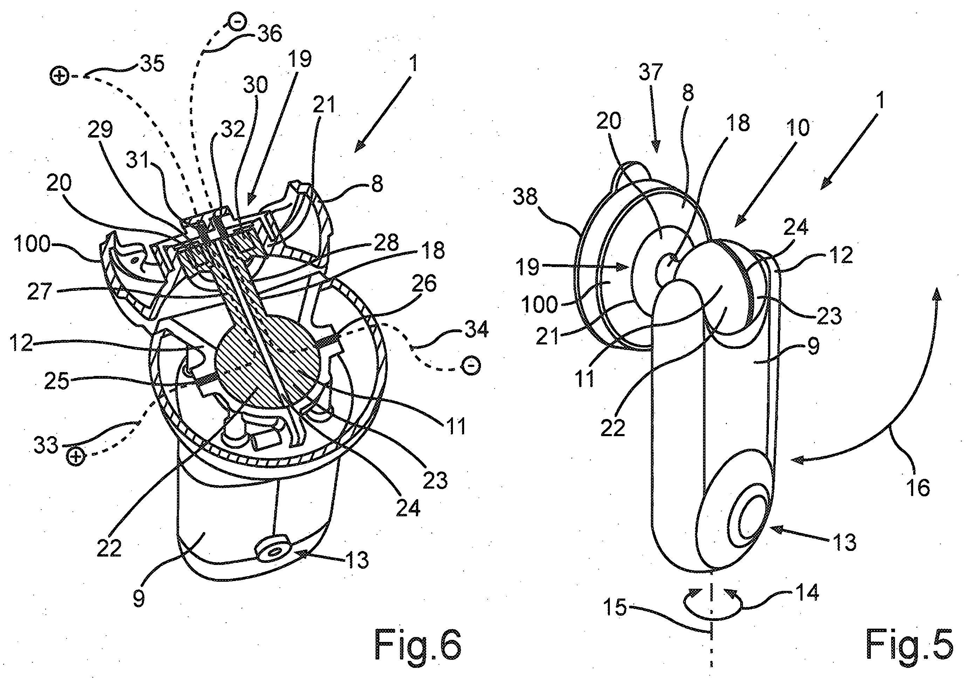

In Fig. 5 a camera 1 according to one embodiment of the present invention is shown. The camera 1 is an electronic device as defined by the patent claims. The camera 1 comprises a first part 8, which is a docking station, as well as a second part 9, which includes an electronic circuit with an image sensor 13 of the camera 1. The second part 9 is pivotally arranged on the first part 8 through a ball joint 10, which comprises a sphere 11 on the one hand as well as a socket 12 on the other hand. While the first part 8 comprises an energy supply unit (e.g. a battery), the second part 9 comprises said electronic circuit with the image sensor 13. The electronic circuit is supplied with electrical power from the energy supply unit.

The second part 9 can be moved relative to the first part 8 in multiple different rotational directions: in a first direction 14 around an axis 15 defined by the oblong second part 9 as well as in a second direction 16.

The sphere 10 is joined to a main body 100 of the first part 8 and is thus a part of the first part 8. The sphere 10 is joined to the main body 100 through a pin 18 which on the other hand is coupled to the main body 100 by means of a plug-in connection 19 consisting of a plug element 20 and a socket 21.

The socket 12 is formed between two arms of the second part which extend parallel to each other. These arms are formed and arranged to accommodate the sphere 11 between them.

A camera 1 according to one embodiment of the present invention is shown in fig. 6. Essentially, the embodiment according to fig. 6 corresponds to that according to fig. 5. Only the design of the socket 12 differs from that according to fig. 5. As appears from fig. 6, the sphere 11 is accommodated within the socket 12 such that the second part 9 can be pivotally moved in the first direction 14 and the second direction 16 (see fig. 5). Furthermore, the sphere 11 is joined to the main body 100 through the pin 18 and through the plug-in connection 19, which comprises the plug element 20 on the one hand and the socket 21 on the other hand. Once the sphere 11 is connected to the main body 100, the second part 9 cannot be moved in a direction around the pin 18 and the plug element 20.

The sphere 11 is subdivided into two sphere halves 22, 23 (see also Fig. 5), which are electrically insulated from each other by means of an insulating element 24. Also, the pin 18 and the plug element 20 are equally subdivided into two portions which are insulated from each other by means of same insulating element 24. Alternatively, the plug element 20 can be insulated from the pin 18 and the sphere 11. In the socket 12, a first spring contact 25 and a second spring contact 26 are provided, which are electrically connected to the first sphere half 22 and the second sphere half 23, respectively. The spring contacts 25, 26 are connected to the sphere halves 22, 23 under spring force such that the electrical connection between the spring contacts 25, 26 on the one hand and the sphere halves 22, 23 on the other hand is provided independently of the angular position of the second part 9 relative to the first part 8. The first spring contact 25 and the second spring contact 26 are electrically connected to said electronic circuit comprising the image sensor 13. Through the spring contacts 25, 26 as well as through the sphere 11 and the pin 18 - as well as the plug element 20, if applicable -, the electronic circuit is electrically connected to the energy supply unit.

As already explained, the sphere 11 is joined to the pin 18 and the plug element 20. Like the sphere 11, the pin 18 is also subdivided into two pin halves 27, 28 in circumferential direction. The first pin half 27 is joined to the first sphere half 22, while the second pin half 28 is electrically connected to the second sphere half 23.

Optionally, also the plug element 20 can formed from an electrically conductive material and can be subdivided into two halves in circumferential direction, namely into a first half 29 and a second half 30. Furthermore, the socket 21 of the first part 8 comprises two contact elements 31, 32, which can be spring contacts. The contact element 31 can be connected to the first half 29 (under spring force), whereas the contact element 32 can be connected to the second half 30 (under spring force). Thus, an electrical connection is provided between the spring contacts 25 and 31 as well as between the spring contacts 26 and 32.

The spring contacts 25, 26 are electrically connected to the electronic circuit by means of wires 33, 34. Equally, the spring contacts 31, 32 are electrically connected to the energy supply unit through wires 35, 36.

Thus, the electronic circuit provided in the second part 9 is supplied with electrical power through the spring contacts 25, 26, through the surface of the sphere 11, of the pin 18 and optionally the surface of the plug element 20 and the contact elements 31, 32. No wires are needed between the first part 8 and the second part 9.

The insulating element 24 extends between an axial end of the sphere 11 on the one hand and an axial end of the pin 18 or optionally of the plug element 20 on the other hand. Thus, a single insulating element 24 is provided to insulate the first sphere half 22, the first pin half 27 (and the first half 29) on the hand and the second sphere half 23, the second pin half 28 (and the second half 30) on the other hand. The sphere 11, the pin 18 can be formed in a one piece.

It can also be provided that the second part 9 is endlessly movable in the first direction 14 at least in one position of the second part 9 relative to the first part 8 in the direction 16. This means that the socket 12 can be endlessly moved with respect to the sphere 11. In this case, the polarity of the electrical connection between the electronic circuit and the energy supply unit can be reversed. This means that the sphere halves 22, 23 on the one hand and the two spring contacts 25, 26 on the other hand can commutate. The electronic circuit can comprise a switch or the like that allows the reversal polarity such that the image sensor of the camera 1 can be correctly supplied with electrical power even if the spring contact 25 is on the ground and the spring contact 26 is on the positive electrical potential (e.g. 12V).

As appears from fig. 5, the camera 1 can comprise a fastening unit 37 for fastening the camera 1 to a vehicle component, such as a windscreen or the like. The fastening unit 37 can have a suction cup 38.

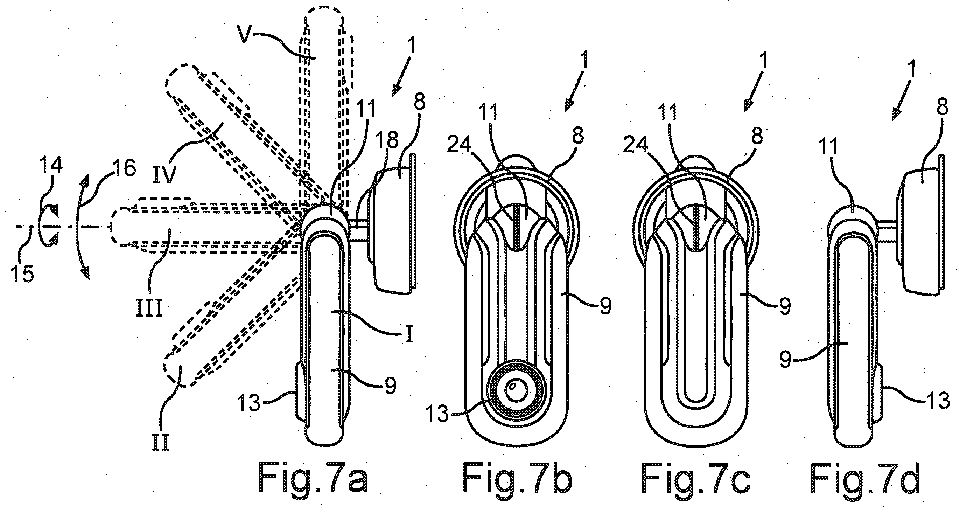

In figs 7a to 7d different positions I to V of the second part 9 relative to the first part 8 are shown. As appears from fig. 7a the second part 9 can be pivotally moved in the direction 16 around the sphere 11. In fig. 7a the second part 9 is shown in five different positions I to V in the direction 16. In the positions I and V the second part 9 is in a right angle with respect to the pin 18, while in the positions II and IV the angle between the second part 9 and the pin 18 is about 135°. In the position III, the second part 9 extends parallel to the pin 18. In this position III it is possible to rotate the second part 9 endlessly in the direction 14 around the axis 15. Thus, different orientations of the image sensor 13 can be achieved as it is shown in figs 7b and 7c. To change the orientation the second part 9 needs to be moved into the position III in which it extends parallel to the pin 18 and after that the second part 9 can be rotated around the axis 15 such that the orientation of the image sensor 13 can changed.

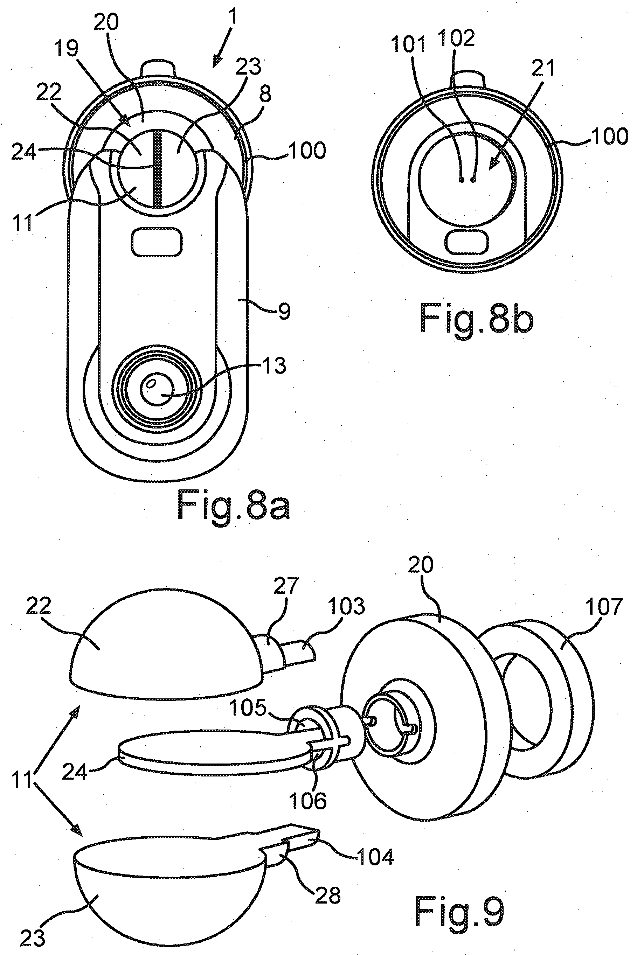

As already explained, the sphere 11 and thus the second part 9 can be detached or disconnected from the main body 100 of the first part 8. For this purpose the plug-in connection 19 is provided which comprises the plug element 20 as well as the socket 21 formed in the first part 8. In fig. 8a the camera 1 is shown again with the second part 9 plugged into the socket 21, whereas in fig. 8b only the main body 100 is shown without the ball joint 10 and the second part 9. Within the socket 21, which is formed in the front face of the main body 100, two electrical pins 101, 102 are arranged. These pins 101, 102 have the same function as the contact elements 31, 32 (fig. 6) and serve for providing an electrical connection between the first part 8 and the sphere 11. The pins 101, 102 can be plugged into corresponding electrical outlets which are provided in the plug element 20.

In fig. 9 an exploded view of the sphere 11, the insulate element 24 as well as the plug element 20 is shown. The insulate element 24 is a plate-like element which is arranged between the sphere halves 22, 23 and between the pin halves 27, 28. The pin half 27 is joined to the sphere half 22 in one piece and the pin half 28 is joined to the sphere half 23 in one piece. To mount the sphere 11, axial end regions 103, 104 of the pin halves 27, 28 are inserted in axial direction into corresponding axial recesses 105, 106 formed on the axial end of the insulate element 24. In the embodiment shown in fig. 9, the plug element 20 is electrically insulated from the sphere 11 by means of the insulate element 24. On the back side of the plug element 20, a ring 107 is mounted.

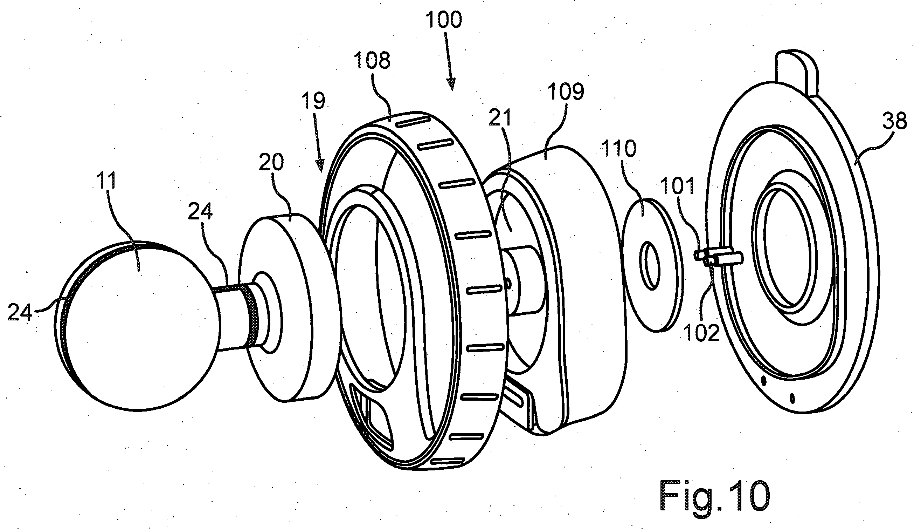

In fig. 10 an exploded view of the main body 100 and the sphere 11 as well as the plug-in connection 19 is shown in more detail. The main body 100 consists of a cover 108 which can be connected to the suction cup 38 to form a housing for a main part 109 and a ring 110. In the main part 109 the energy supply unit is accommodated and the socket 21 is formed on the front face of the main part 109 for receiving the plug element 20.

## Claims

1. A camera for a motor vehicle (3), comprising a first part (8) and a second part (9) pivotally arranged on the first part (8) through a ball joint (10) comprising a sphere (11) on the one hand and a socket (12) on the other hand, wherein the second part (9) comprises an electronic circuit for providing a functionality in the motor vehicle (3), while the electronic circuit comprises an image sensor (13) of the camera,
**characterized in that**
the first part (8) comprises an energy supply unit for supplying the electronic circuit with electrical power, wherein at least a surface of the sphere (11) is at least partially formed from an electrically conductive material such that the electronic circuit is supplied with the electrical power through the surface of the sphere (11) and the first part (8) is movable relative to the second part (9) such that a polarity of the electrical connection between the electronic circuit and the energy supply unit is reversible.

2. An electronic device (1) according to claim 1,
**characterized in that**
the surface of the sphere (11) is subdivided into two electrically conductive portions (22, 23) which are electrically insulated from each other, wherein the electronic circuit is electrically connected with a ground of the energy supply unit through one of the portions (22, 23) and with a positive electric potential of the energy supply unit through the other portion (22, 23).

3. An electronic device (1) according to claim 2,
**characterized in that**
the two portions (22, 23) are sphere halves.

4. An electronic device (1) according to any one of the preceding claims,
**characterized in that**
the socket (12) comprises at least one spring contact (25, 26) electrically coupled to the electronic circuit and connected to the conductive sphere (11) under spring tension.

5. An electronic device (1) according to claim 3 or 4,
**characterized in that**
the socket (12) comprises a first spring contact (25) connected to a first of the two sphere portions (22) under spring tension and a second spring contact (26) connected to the second sphere portion (23) under spring tension.

6. An electronic device (1) according to any one of the preceding claims,
**characterized in that**
the sphere (11) is joined to the first part (8) through a pin (18) and the socket (12) is formed in the second part (9), wherein at least a surface of the pin (18) is at least partially formed from an electrically conductive material such that the electronic circuit is supplied with the electrical power through the surface of the sphere (11) and through the surface of the pin (18).

7. An electronic device (1) according to any one of the preceding claims,
**characterized in that**
the sphere (11) is detachable connected to the fist part (8) by means of a plug-in connection.

8. An electronic device (1) according to any one of the preceding claims,
**characterized in that**
the second part (9) is movable relative to the first part (8) in at least two degrees of freedom, in particular in three degrees of freedom.

9. An electronic device (1) according to any one of the preceding claims,
**characterized in that**
the first part (8) comprises a fastening unit (37) for fastening the electronic device (1) to a vehicle (3) component.

10. An electronic device (1) according to claim 9,
**characterized in that**
the fastening unit (37) comprises a suction cup (38) for fastening the electronic device (1) to the vehicle (3) component.

## Patentansprüche

1. Kamera für ein Kraftfahrzeug (3), die eine erste Komponente (8) und eine zweite Komponente (9) umfasst, die mittels eines Kugelgelenks (10), das zum einen eine Kugel (11) und zum anderen eine Buchse (12) enthält, drehbar an der ersten Komponente (8) angeordnet ist, wobei die zweite Komponente (9) eine elektronische Schaltung enthält, um eine Funktionalität in dem Kraftfahrzeug (3) zur Verfügung zu stellen, wobei die elektronische Schaltung einen Bildsensor (13) der Kamera umfasst,
**dadurch gekennzeichnet, dass**
die erste Komponente (8) eine Energieversorgungseinheit umfasst, um die elektronische Schaltung mit elektrischer Leistung zu versorgen, wobei mindestens eine Oberfläche der Kugel (11) mindestens teilweise aus einem elektrisch leitfähigen Material gebildet ist, so dass die elektronische Schaltung durch die Oberfläche der Kugel (11) mit der elektrischen Leistung versorgt wird, und die erste Komponente (8) relativ zu der zweiten Komponente (9) beweglich ist, so dass eine Polarität der elektrischen Verbindung zwischen der elektronische Schaltung und der Energieversorgungseinheit umkehrbar ist.

2. Elektronische Vorrichtung (1) nach Anspruch 1,
**dadurch gekennzeichnet, dass**
die Oberfläche der Kugel (11) unterteilt ist in zwei elektrisch leitfähige Teilbereiche (22, 23), die voneinander elektrisch isoliert sind, wobei die elektronische Schaltung durch einen der Teilbereiche (22, 23) mit der Masse der Energieversorgungseinheit und durch den anderen Teilbereich (22, 23) mit einem positiven elektrischen Potential der Energieversorgungseinheit elektrisch verbunden ist.

3. Elektronische Vorrichtung (1) nach Anspruch 2,
**dadurch gekennzeichnet, dass**
die zwei Teilbereiche (22, 23) Halbkugeln sind.

4. Elektronische Vorrichtung (1) nach einem der vorhergehenden Ansprüche,
**dadurch gekennzeichnet, dass**
die Buchse (12) mindestens einen Federkontakt (25, 26) enthält, der mit der elektronischen Schaltung elektrisch gekoppelt ist und unter Federspannung mit der leitfähigen Kugel (11) verbunden ist.

5. Elektronische Vorrichtung (1) nach Anspruch 3 oder 4,
**dadurch gekennzeichnet, dass**
die Buchse (12) einen ersten Federkontakt (25), der mit einem ersten der zwei Kugelteilbereiche (22) unter Federspannung verbunden ist, und einen zweiten Federkontakt (26), der mit dem zweiten Kugelteilbereich (23) unter Federspannung verbunden ist, enthält.

6. Elektronische Vorrichtung (1) nach einem der vorhergehenden Ansprüche,
**dadurch gekennzeichnet, dass**
die Kugel (11) an die erste Komponente (8) durch einen Anschlussstift (18) angefügt ist und die Buchse (12) in der zweiten Komponente (9) gebildet ist, wobei mindestens eine Oberfläche des Anschlussstiftes (18) mindestens teilweise aus einem elektrisch leitfähigen Material gebildet ist, so dass die elektronische Schaltung durch die Oberfläche der Kugel (11) und durch die Oberfläche des Anschlussstiftes (18) mit elektrischer Leistung versorgt wird.

7. Elektronische Vorrichtung (1) nach einem der vorhergehenden Ansprüche,
**dadurch gekennzeichnet, dass**
die Kugel (11) mit der ersten Komponente (8) mit Hilfe einer Steckverbindung lösbar verbunden ist.

8. Elektronische Vorrichtung (1) nach einem der vorhergehenden Ansprüche,
**dadurch gekennzeichnet, dass**
die zweite Komponente (9) relativ zu der ersten Komponente (8) in mindestens zwei Freiheitsgraden, insbesondere in drei Freiheitsgraden, beweglich ist.

9. Elektronische Vorrichtung (1) nach einem der vorhergehenden Ansprüche,
**dadurch gekennzeichnet, dass**
die erste Komponente (8) eine Befestigungseinheit (37) für die Befestigung der elektronischen Vorrichtung (1) an einer Komponente des Fahrzeugs (3) umfasst.

10. Elektronische Vorrichtung (1) nach Anspruch 9,
**dadurch gekennzeichnet, dass**
die Befestigungseinheit (37) einen Saugnapf (38) für die Befestigung der elektronischen Vorrichtung (1) an der Komponente des Fahrzeugs (3) umfasst.

## Revendications

1. Caméra pour un véhicule motorisé (3), comprenant une première partie (8) et une deuxième partie (9) agencée pivotante sur la première partie (8) au moyen d'un joint à rotule (10) comprenant d'une part une sphère (11) et d'autre part un logement (12), la deuxième partie (9) comprenant un circuit électronique destiné à procurer une fonctionnalité dans le véhicule motorisé (3), le circuit électronique comprenant un capteur d'image (13) de la caméra,
**caractérisée en ce que**
la première partie (8) comprend une unité d'alimentation en énergie destinée à alimenter le circuit électronique en énergie électrique, au moins une surface de la sphère (11) étant formée en partie au moins d'un matériau électriquement conducteur de manière à ce que le circuit électronique soit alimenté en énergie électrique par le biais de la surface de la sphère (11), et la première partie (8) étant mobile par rapport à la deuxième partie (9) de manière à ce qu'une polarité de la liaison électrique entre le circuit électronique et l'unité d'alimentation en énergie soit inversible.

2. Dispositif électronique (1) selon la revendication 1,
**caractérisé en ce que**
la surface de la sphère (11) est subdivisée en deux portions électriquement conductrices (22, 23) qui sont électriquement isolées l'une de l'autre, le circuit électronique étant électriquement relié à une masse de l'unité d'alimentation en énergie par le biais d'une des portions (22, 23) et à un potentiel électrique positif de l'unité d'alimentation en énergie par le biais de l'autre portion (22, 23).

3. Dispositif électronique (1) selon la revendication 2,
**caractérisé en ce que**
les deux portions (22, 23) sont des demisphères.

4. Dispositif électronique (1) selon l'une quelconque des revendications précédentes,
**caractérisé en ce que**
le logement (12) comprend au moins un contact à ressort (25, 26) électriquement couplé au circuit électronique et relié à la sphère conductrice (11) par effet de tension de ressort.

5. Circuit électronique (1) selon la revendication 3 ou 4,
**caractérisé en ce que**
le logement (12) comprend un premier contact à ressort (25) relié à une première des deux portions de sphère (22) par effet de tension de ressort et un deuxième contact à ressort (26) relié à la deuxième portion de sphère (23) par effet de tension de ressort.

6. Dispositif électronique (1) selon l'une quelconque des revendications précédentes,
**caractérisé en ce que**
la sphère (11) se raccorde à la première partie (8) au moyen d'une broche (18) et le logement (12) est ménagé dans la deuxième partie (9), au moins une surface de la broche (18) étant formée en partie au moins d'un matériau électriquement conducteur de manière à ce que le circuit électronique soit alimenté en énergie électrique par le biais de la surface de la sphère (11) et par le biais de la surface de la broche (18).

7. Dispositif électronique (1) selon l'une quelconque des revendications précédentes,
**caractérisé en ce que**
la sphère (11) est reliée de manière amovible à la première partie (8) par une liaison emboîtable.

8. Dispositif électronique (1) selon l'une quelconque des revendications précédentes,
**caractérisé en ce que**
la deuxième partie (9) est mobile par rapport à la première partie (8) selon au moins deux degrés de liberté, plus particulièrement selon trois degrés de liberté.

9. Dispositif électronique (1) selon l'une quelconque des revendications précédentes,
**caractérisé en ce que**
la première partie (8) comprend une unité de fixation (37) destinée à fixer le dispositif électronique (1) à un composant du véhicule (3).

10. Dispositif électronique (1) selon la revendication 9,
**caractérisé en ce que**
l'unité de fixation (37) comprend une ventouse (38) destinée à fixer le dispositif électronique (1) au composant du véhicule (3).
